# EUROPÄISCHE PATENTSCHRIFT

(11) **EP 1 994 375 B1**
(45) Veröffentlichungstag und Bekanntmachung des Hinweises auf die Patenterteilung: **09.03.2016**
(21) Anmeldenummer: 07711905.5
(22) Anmeldetag: 12.03.2007
(51) Int. Cl.: G01F 3/10, G01F 15/06

(54) **VOLUMENMESSVORRICHTUNG MIT SENSOR**
VOLUMETRIC FLOWMETER HAVING A SENSOR
DISPOSITIF DE MESURE DE VOLUME AVEC CAPTEUR

(30) Priorität: 11.03.2006 DE 202006003860 U; 11.03.2006 DE 102006011310; 19.10.2006 DE 102006049955
(43) Veröffentlichungstag der Anmeldung: 26.11.2008
(73) Patentinhaber: Kracht GmbH, 58791 Werdohl (DE)
(72) Erfinder: KIRSEBAUER, Holger, 58507 Lüdenscheid (DE); BRUDNY, Franz, 59846 Sundern (DE)
(74) Vertreter: Cohausz Hannig Borkowski Wißgott
(86) Internationale Anmeldenummer: PCT/EP2007/002148
(87) Internationale Veröffentlichungsnummer: WO 2007/104517

(56) Entgegenhaltungen:
- DE-A1- 10 041 092
- DE-A1- 10 250 319
- DE-A1-102004 020 734
- DE-A1-102004 027 387
- DE-C1- 4 040 409
- DE-U1- 29 620 960
- JP-A- 62 269 014

## Beschreibung

Die Erfindung betrifft eine Volumenmessvorrichtung zur Messung eines Fluidvolumenstroms.

Eine Volumenstrommessung eines Fluids ist abhängig von verschiedenen Aspekten. Eine Möglichkeit, einen Volumenstrom möglichst genau zu messen, geht aus der DE 32 44 907 A1 hervor, bei der das verdrängte Volumen einer Behandlungsflüssigkeit gemessen wird. Derartige Vorrichtungen sind aber sehr groß bauend.

Eine gattungsbildende Volumenstrommessvorrichtung ist beispielsweise in der Patentschrift DE 40 40 409 C1 beschrieben. Dort wird ein zu messendes Volumen in Zahnzwischenräumen zweier miteinander kämmender Zahnräder von einem Eingang zu einem Ausgang transportiert und dabei für jeden an einem Sensor vorbei rotierenden Zahn ein Messsignal erzeugt. Aus der DE 40 42 397 A1 ist hierzu ein magneto-elektrischer Sensor in Form eines Differentialfeldplattenfühlers beschrieben.

Aus der Offenlegungsschrift DE 10 2004 027 387 A1 ist ebenfalls eine Volumenmessvorrichtung zur Messung eines Volumens bekannt, welches in Zahnzwischenräumen zweier miteinander kämmender Zahnräder von einem Eingang zu einem Ausgang befördert wird, bei der für jeden am Sensor vorbei rotierenden Zahn ein Messsignal erzeugt wird. Es ist dabei vorgesehen, mittels gegenüber einem Zahnkranz in Umfangsrichtung versetzter Magnetwiderstandsensoren zeitlich versetzte analoge Signale zu erzeugen, die in abzählbare Werte umgesetzt werden, um Teilvolumen der zwischen zwei Zähnen geförderten Volumen zu bestimmen.

Aufgabe der vorliegenden Erfindung ist es, eine Genauigkeit und eine Auflösung einer Volumenmessvorrichtung zu verbessern.

Diese Aufgabe wird gelöst durch eine Volumenmessvorrichtung mit den Merkmalen des Anspruchs 1. Vorteilhafte Ausgestaltungen und Weiterbildungen sind in den jeweiligen abhängigen Patentansprüchen angegeben.

Eine erfindungsgemäße Volumenmessvorrichtung zur Messung eines Fluidvolumenstroms weist mindestens zwei in einer Messkammer drehbar gelagerte und miteinander kämmende Verzahnungselemente auf. Die Messkammer weist für den Fluidvolumenstrom einen Eingang und einen Ausgang auf. In einem Kämmbereich durch ineinandergreifende Zähne der miteinander kämmenden Verzahnungselemente wird eine Trennung zwischen dem Eingang und dem Ausgang gebildet. Ein vom Eingang zum Ausgang transportierter Fluidvolumenstrom ist in Abhängigkeit von einer Umdrehungsbewegung von zumindest einem der Verzahnungselemente aufnehmbar. Wenigstens ein berührungslos arbeitender Messfühler zur Bewegungsdetektierung des Verzahnungselementes anhand eines sich relativ zum Messfühler ändernden Magnetfeldes ist vorgesehen. Die Volumenmessvorrichtung erzeugt für eine weitere Signalauswertung in Abhängigkeit eines durch den Messfühler aufgenommenen Messsignals jeweils zumindest ein Cosinus- und ein Sinussignal.

Die Erzeugung des Cosinus- und des Sinussignals aus einem einzelnen Signal erlaubt eine verbesserte Genauigkeit bei der Auflösung des Signals.

Zudem ist vorgesehen, dass der Messfühlers eine Winkeländerung magnetischer Feldlinien detektiert. Die Erfindung sieht ausserdem vor, dass eine dem Messfühler zugeordnete Magnetfelderzeugungseinrichtung ein diametraler Magnet ist. Dieser ist vorzugsweise zu einer Achse oder Welle eines Verzahnungselementes derart angeordnet, dass eine Vorzugsrichtung des diametralen Magnets zumindest annähernd senkrecht zu der Welle oder Achse verläuft. Die Erfindung sieht vor, dass eine dem Messfühler zugeordnete Magnetfelderzeugungseinrichtung ein Magnet mit mindestens zwei Polen ist. Beispielsweise kann dieses ein Ringmagnet sein, insbesondere ein kunststoffgebundener Magnet, dessen Einbereichsteile über ein Magnetsystem in einem Spritzwerkzeug mehrpolig ausgerichtet worden ist.

Die Erfindung sieht die Verwendung eines nach dem Magnetwiderstands-Prinzip oder dem anisotropen Magnetwiderstands-Prinzip arbeitenden Messfühlers vor.

Vorzugsweise wird eine Auflösung eines Drehwinkels des Verzahnungselementes unterhalb einer Zahnteilung des Verzahnungselementes ermöglicht. Des Weiteren wird vorzugsweise ein Signal-Rauschabstand verbessert. Insbesondere ermöglicht der Messfühler eine Detektierung einer Transportrichtung des Fluidvolumens.

Als Verzahnungselemente werden vorzugsweise Zahnräder mit einer identischen Verzahnung verwendet. Die Zahnräder weisen dabei insbesondere einen identischen Durchmesser auf.

Die Zahnräder sind dabei so drehbar gelagert, dass sie durch eine Strömung des Fluidvolumens angetrieben werden können. Vorzugsweise ist dazu lediglich ein geringer Druckunterschied zwischen einer Eingangsseite und einer Ausgangsseite der Volumenmessvorrichtung erforderlich.

Der Kämmbereich erstreckt sich beispielsweise über wenigstens jeweils zwei Zähne der beiden Verzahnungselemente. Insbesondere sind die beiden Verzahnungselemente so zueinander ausgerichtet, dass bei einem Kämmen derselbigen miteinander jeweils in einem Zahngrund zwischen ineinander greifenden Zähnen kein verbleibendes Volumen resultiert, welches insbesondere zu einem die Messung verfälschendem Transport eines Leckvolumens vom Ausgang zum Eingang führen könnte. Vorzugsweise sind die Verzahnungselemente so angeordnet, dass kein freier Strömungspfad zwischen einem Eingang und einem Ausgang der Volumenmessvorrichtung vorgesehen ist. Ein Transport erfolgt vielmehr vorzugsweise ausschließlich mittels der festen Messvolumina, welche insbesondere in Zahnlücken eingeschlossen sind. Ein festes Messvolumen entspricht beispielsweise einem Volumen, welches von einem Zahn aus einer beim Kämmen gegenüberliegenden und in Eingriff befindlichen Zahnlücke verdrängt wird. Insbesondere entspricht das feste Messvolumen dem von einer ein Verzahnungselement umgebenden Gehäusewand und dem Verzahnungselement in einer Zahnlücke eingeschlossen Volumen abzüglich des beim Kämmen im Zahngrund verbleibenden Volumens. Die Gehäusewand ist dabei vorzugsweise so ausgestaltet, dass sie das Verzahnungselement jeweils stirnseitig eng abdichtend umgibt. Des Weiteren ist die Gehäusewand vorzugsweise über einen Umfangsbereich, welcher sich über wenigstens eine doppelte Zahnteilung erstreckt, eng abdichtend an eine Hüllkurve des Verzahnungselementes angelegt.

In einer Ausgestaltung kann zusätzlich ein Bypass zwischen Ein- und Ausgang vorgesehen sein. Insbesondere kann ein schaltbarer Bypass vorgesehen sein. Vorzugsweise wird eine Messbereichanpassung bzw. Erweiterung mittels eines Bypasses ermöglicht.

Der Eingang und/oder der Ausgang der Volumenmessvorrichtung sind insbesondere so angeordnet, dass diese nicht direkt auf den Überlappungsbereich gerichtet sind. Beispielsweise ist eine Zustrom- bzw. Abstromrichtung zumindest in etwa parallel zu einer Drehachse eines Verzahnungselementes angeordnet. In einer Variante können Zustrom- und/oder Abstromrichtung genau auf den Kämmbereich gerichtet sein, wobei sie insbesondere senkrecht zu der Drehachse eines Verzahnungselementes angeordnet sind.

Als Messfühler, welcher nach dem Giant-Magneto-Resistance-Prinzip, im folgenden als GMR-Prinzip bezeichnet, arbeitet, wird beispielsweise ein Schichtsystem aus ferromagnetischen und nicht-magnetischen Metallen verwendet. Ein derartiges Schichtsystem ist beispielsweise in der Druckschrift DE 694 39 964 T2 und den darin enthaltenen Referenzen beschrieben, auf weiche hiermit im Rahmen der Offenbarung verwiesen wird. An Stelle einer mehrlagigen Schichtstruktur kann auch eine granulare Legierung verwendet werden, in der magnetische Ausscheidungen in einer nicht magnetischen Matrix eingebettet sind. Eine derartige Legierung wird beispielsweise in der DE 698 20 524 T2 beschrieben, auf die im Rahmen der Offenbarung verwiesen wird. Bei einem nach dem GMR-Prinzip arbeitenden Messfühler wird beispielsweise ein in einer Schichtebene des Sensors fließender Strom eingespeist, und eine Widerstandsänderung detektiert, welche durch Änderung einer in Schichtebene aufgerichteten Magnetfeldkomponente verändern wird. Bei Feldstärken in der Größenordnung von etwa 10⁻² Tesla erhält man beispielsweise Widerstandsänderungen von etwa 50% bei Raumtemperatur.

Der Einsatz von GMR-Sensoren erfordert jedoch eine hohe Anforderung an die Herstellungsgenauigkeit der zur Verfügung stehenden Schichtsysteme. Daher besteht die Möglichkeit, andere nach einem MR-Effekt funktionierende Sensoren ebenfalls einsetzen zu können, sofern durch den Aufbau des Sensors sowie der Art der Signalauswertung dafür Sorge getragen wird, eine hohe Auflösung des Messsignals erreichen zu können. Hierbei ist zwischen MR-, GMR- und AMR-Sensor zu unterscheiden, da diese unterschiedliche Messaufbauten aufweisen und unterschiedliche Genauigkeiten mit unterschiedlichem Aufwand liefern.

Ein nach dem anisotropen Magnetwiderstands-Prinzip, auch AMR genannt, arbeitender Sensor ist daher ebenfalls einsetzbar. Hierbei wird ausgenutzt, dass durch ein äusseres Magnetfeld und dessen Winkel aufgrund anisotroper Streuquerschnitte von Rumpfelektroden ein Widerstand veränderlich ist. Dieser kann erhöht oder auch verringert werden. Bei der Messung wird darauf abgestellt, dass der longitudinale und der transversale Widerstand unterschiedlich sind. Um eine verbesserte Aussage zu erhalten, werden diese Werte vorzugsweise normiert, insbesondere auf einen Normalwiderstand ohne wirkendem Magnetfeld. Vorzugsweise weichen die Widerstände um mindestens 3% bis 5% voneinander ab. Der Magnetowiderstandseffekt kann positiv oder negativ sein. Das bedeutet, der Widerstand kann ansteigen oder abgesenkt werden, insbesondere soweit dass ein Minoritätsstatt einem Majoritätsstrom entseht. Beispielsweise ist dieses einsetzbar, um eine Richtungs- und/oder Ortsangabe bezüglich des aufgenommenen Signal mit einfließen zu lassen.

Der Sensor setzt bevorzugt ein ferromagnetisches Material ein. Vorzugsweise werden Legierungen für einen nach dem anisotropen Magnetwiderstands-Prinzip arbeitenden Sensor eingesetzt. Eine Ausgestaltung sieht vor, dass polykristallines Nickel eingesetzt wird. Auch Permalloy in Form von NiFe ist einsetzbar, vorzugsweise mit einer Gewichtsverhältnis von etwa 80:20. Eine Weiterbildung sieht vor, dass NiFe mit Ir legiert wird. Dadurch lässt sich eine Vergrösserung des Magnetwiderstandseffekts erzielen. Eine weitere Ausgestaltung nutzt eine NiCo-Legierung, zumindest als Basis. Das Material für den Sensor kann in Einzelfilmform genutzt werden wie auch verbunden mit anderen Schichten als Kompositmaterial. Auch halbmetallische ferromagnetische Materialien wie Chromdioxid oder ähnliches sind einsetzbar.

Weiterhin können Werkstoffe eingesetzt werden, wie sie beispielsweise aus der DE 68 908 768 T2 oder der DE 689 21 856 T2 hervorgehen. Vorzugsweise weist ein Sensor eine Vielzahl an anisotropen Widerständen auf. Einerseits sind dadurch Testschaltungen aber auch Abgleichungen wie Selbstdiagnosen sowie verschiedene der Widerstände mit unterschiedlichen Messbrücken verschaltbar, zum Beispiel in Form von Wheatstone'schen Brückenschaltungen. Der Sensor kann in Chipform vorliegen und eine Vielzahl an Messwiderständen aufweisen.

Als ein_MR-Messfühler wird beispielsweise ein Feldsensor KMZ 20 S der Firma HL-Planartechnik GmbH verwendet. In einer anderen Variante kann auch ein Sensor KM1 15 der Firma Philipps verwendet werden.

Bevorzugt ist es beim Einsatz eines MR-Sensors, diesen mit einem stabilen magnetischen Hilfsfeld in einem bestimmten, bekannten Winkel, beispielsweise senkrecht zur eigentlichen Messebene vorzusehen. Dadurch wird beispielsweise verhindert, dass mittels eines Störfeldes eine Umpolung einer Magnetisierungsrichtung erfolgt.

Zur Veränderung des in Abhängigkeit vom transportierten Fluidvolumenstromes variierbaren Magnetfeldes sind verschiedene Varianten vorgesehen, in denen wenigstens eine Magnetfelderzeugungseinrichtung oder wenigstens eine Magnetfeldänderungseinrichtung und der Messfühler relativ zueinander bewegbar sind. In einer ersten Variante ist vorgesehen, dass wenigstens eine Magnetfelderzeugungseinrichtung relativ zum Messfühler bewegbar ist. Eine Magnetfelderzeugungseinrichtung ist beispielsweise ein Permanentmagnet oder Elektromagnet. In einer weiteren Variante ist vorgesehen, dass wenigstens eine Magnetfeldänderungseinrichtung relativ zum Messfühler bewegbar ist. Eine Magnetfeldänderungseinrichtung weist beispielsweise wenigstens ein Element aus einem magnetisierbaren Material auf. Insbesondere weist eine Magnetfeldänderungseinrichtung wenigstens ein Element aus einem ferromagnetischen Material auf.

Gemäß einer Weiterbildung ist wenigstens eine ortsfeste Magnetfelderzeugungseinrichtung vorgesehen, deren Magnetfeld wenigstens eines der Verzahnungselemente am Ort des Messfühlers veränderbar ist. Beispielsweise ist die ortsfeste Magnetfelderzeugungseinrichtung ein Permanentmagnet oder ein Elektromagnet. Ortsfest ist insbesondere so zu verstehen, dass die Magnetfelderzeugungseinrichtung in einer fixierten Lage in Bezug auf Drehachsen der Verzahnungselemente angeordnet ist. Die ortsfeste Magnetfelderzeugungseinrichtung ist dabei insbesondere so ausgerichtet, dass eine Magnetfeldkomponente in einer Schichtebene des Messfühlers liegt. In einer Variante können die Magnetfelderzeugungseinrichtung und der Messfühler auch vertauscht werden. D.h. die Magnetfelderzeugungseinrichtung ist ortsfest und der Messfühler ist beispielsweise drehfest in oder an einem Zahnrad befestigt. Gemäß einer Ausgestaltung ist wenigstens eine drehfest mit wenigstens einem der Verzahnungselemente verbundene Magnetfelderzeugungseinrichtung oder Magnetfeldänderungseinrichtung vorgesehen. Eine drehfeste Verbindung kann dabei sowohl mittelbar als auch unmittelbar vorgesehen sein. Beispielsweise ist die drehfeste Verbindung eine mechanische Verbindung. In einer anderen Variante kann anstelle einer mechanischen Verbindung auch eine Magnetkupplung verwendet werden.

Beispielsweise ist vorgesehen, dass wenigstens eine Magnetfelderzeugungseinrichtung oder Magnetfeldänderungseinrichtung in wenigstens eines der Verzahnungselemente eingebettet ist. Insbesondere ist die Magnetfeldänderungseinrichtung bzw. die Magnetfelderzeugungseinrichtung vom Fluidvolumen abgeschottet. Vorzugsweise ermöglicht dies eine verminderte Korrosion, welche beispielsweise bei Volumenmessungen an aggressiven Fluiden auftreten kann. Vorzugsweise erfolgt keinerlei Degradation einer Magnetfeldstärke der Magnetfelderzeugungseinrichtung.

Erfindungsgemäß ist wenigstens eine Magnetfelderzeugungseinrichtung oder Magnetfeldänderungseinrichtung in einem Hohlraum einer Welle eines Verzahnungselementes angeordnet, welcher hermetisch vom Fluidvolumen getrennt ist. Beispielsweise kann als Hohlraum eine Bohrung vorgesehen sein, welche nach Einsetzen der Magnetfelderzeugungseinrichtung oder der Magnetfeldänderungseinrichtung mit einem Stopfen wieder verschlossen wird. Vorzugsweise wird der Stopfen per Elektronenschweißung mit der Welle stopfschlüssig dichtend verbunden. In einer anderen Variante kann auch vorgesehen sein, dass der Stopfen Teil eines Zahnrades ist. Beispielsweise ist der Stopfen becherförmig ausgestaltet und an einer Stirnseite eines Zahnrades einsetzbar. Neben einer Elektronenverschweißung kann auch eine Verklebung oder eine mechanische Verbindung wie beispielsweise eine Verschraubung vorgesehen sein.

Als Magnetfelderzeugungseinrichtung wird vorzugsweise wiederum wenigstens ein Permanentmagnet oder wenigstens ein Elektromagnet verwendet. Als Magnetfeldänderungseinrichtung wird beispielsweise wenigstens ein exzentrisch zu einer Zahnradachse angeordnetes weichmagnetisches Bauteil verwendet. Beispielsweise ist eine Zahnradachse oder ein Verzahnungselement magnetisch inhomogen, d.h. Bereiche verschiedener magnetischer Suszeptibilität aufweisend, ausgestaltet. Eine magnetische Inhomogenität ist dabei insbesondere nicht rotationssymmetrisch um die Zahnradachse ausgestaltet. Ins-besondere können mehrere Magnetfelderzeugungseinrichtungen und/oder Magnetfeldänderungseinrichtungen verwendet werden.

Gemäß einer Weiterbildung wird ein Magnet aus anisotropem Material hergestellt, insbesondere gepresst, beispielsweise als gesinterter Magnet, oder verspritzt, beispielsweise als kunststoffgebundener Magnet, um eine gewünschte Ausrichtung der Pole einzustellen. Der Magnet ist vorzugsweise beschichtet. Gemäß einer Ausgestaltung weist der Magnet eine metallische Beschichtung auf. Diese ist vorzugsweise aufgalvanisiert. Bevorzugt ist eine Verwendung einer Mehrfachbeschichtung, insbesondere um damit einen direkten Kontakt des Magnetmaterials mit einem Fluid zu vermeiden, dass durch die Volumenmessvorrichtung strömt. Vorzugsweise werden Magnete mit einer galvanisch aufgebrachten Mehrfachbeschichtung eingesetzt. Eine weitere Ausgestaltung sieht vor, dass das Material des Magneten mit zumindest einer organischen Beschichtung versehen ist. Insbesondere wird derartiges bei Einsatz mit korrosiven Fluiden vorgesehen. Eine derartige Beschichtung kann mittels beispielsweise kathodischer Tauchlackierung aufgetragen werden. Auch können mehrere Lackschichten aufgetragen werden. Auch besteht die Möglichkeit, eine metallische Grundbeschichtung vorzusehen, auf die anschließend eine organische Beschichtung aufgetragen wird. Bei besonders korrosiven Fluiden wie auch bei hohen Temperaturen oder zum Zwecke der Chemikalienbeständigkeit wird bevorzugt eine Teflonbeschichtung eingesetzt. Bei Einsatz in anderen Anlagen, zum Beispiel in lebensmitteltechnischen Anlagen, wird beispielsweise eine Beschichtung auf Basis von Parylene aufgetragen. Eine Beschichtung ermöglicht den Einsatz des Magneten so, dass dieser mit dem Fluid in Kontakt treten kann, ohne dass es bei längerem Kontakt zu einer Beeinträchtigung des magnetischen Materials kommt. Beispielsweise kann der Magnet plan mit einer Oberfläche des Gehäuses, einer Welle oder Achse des Verzahnungselementes und/oder des Verzahnungselementes selbst abschließen.

Gemäß einer Weiterbildung ist vorgesehen, dass die Messfühler zumindest zu einem Messzeitpunkt jeweils einem Nordpol und wenigstens einem Südpol gegenüber liegen. Dazu ist beispielsweise ein Magnet dem Messfühler gegenüber liegend angeordnet, welcher zwei im Wesentlichen in Richtung des Messfühlers ausgerichtete Polflächen aufweist. Der Magnet ist dabei beispielsweise gemäß einer der vorstehend beschriebenen Ausgestaltungen in einer Welle eines Verzahnungselementes oder in einem Verzahnungselement oder drehfest mit einem Verzahnungselement verbunden vorgesehen.

Hinsichtlich einer Ausrichtung des Messfühlers ist vorgesehen, dass eine Messebene des Messfühlers in einer ersten Ausgestaltung zumindest in etwa parallel zu einer Stirnfläche eines der Verzahnungselemente ausgerichtet ist. Insbesondere ist ein Magnetfeld am Ort des Messfühlers im Wesentlichen parallel zur Messebene ausgerichtet. Vorzugsweise ist der Messfühler kollinear zu einer Drehachse eines Verzahnungselementes angeordnet. In einer anderen Variante kann vorgesehen sein, dass die Messebene des Messfühlers schief zur Stirnfläche eines der Verzahnungselemente ausgerichtete ist. Ein Verkippungswinkel liegt dabei vorzugsweise unterhalb von 45°. Insbesondere beträgt der Verkippungswinkel in etwa 10 bis 30°. Es kann sowohl eine Verkippung in einer einzigen Raumrichtung vorgesehen sein als auch eine Verkippung in zwei zueinander orthogonalen Raumrichtungen. Vorzugsweise ermöglicht eine Verkippung eine magnetische Vorspannung des Messfühlers. Insbesondere wird der Messfühler von einer Magnetfeldkomponente senkrecht zur Messebene durchsetzt.

Der Messfühler ist gemäß einer weiteren Ausgestaltung ein Drehsensor.

Insbesondere kann jedem Verzahnungselement wenigstens ein Messfühler zugeordnet sein.

In einer Ausgestaltung ist vorgesehen, dass die Verzahnungselemente in einem Gehäuse angeordnet sind, wobei eine druckfeste Trennwand zwischen der Messkammer und dem Messfühler angeordnet ist. Beispielsweise ist die Trennwand so druckfest ausgestaltet, dass bei einem jeweiligen Betriebs- bzw. Spitzendruck in der Messkammer keine Kraftübertragung auf den Messfühler vorliegt. Ein Betriebs- bzw. Spitzendruck beträgt beispielsweise bis zu 1000 bar. Es können jedoch auch geringere oder größere Drücke vorgesehen sein. Vorzugsweise ermöglicht der MR-, der GMR und/oder der AMR-Sensor einen Abtastabstand, mit welchem eine entsprechende Dimensionierung der Trennwand für eine Druckfestigkeit für noch höhere Fluiddrücke vorgesehen werden kann. Vorteilhafterweise ist der Messfühler außerhalb der Messkammer hermetisch vom Fluidvolumen abgetrennt angeordnet.

Gemäß einer Weiterbildung ist die Trennwand amagnetisch. Beispielsweise ist die Trennwand aus einem nicht-magnetischen Edelstahl. In anderen Ausgestaltungen kann die Trennwand jedoch auch aus einem Kunststoffmaterial oder aus Aluminium sein. Zur Vermeidung einer Korrosion ist insbesondere eine korrosionshemmende Beschichtung vorgesehen.

Zusätzlich oder alternativ kann vorgesehen sein, dass zumindest die Verzahnungselemente, die Achsen der Verzahnungselemente und das Gehäuse jeweils ein amagnetisches Material aufweisen. Vorzugsweise wird dadurch eine Magnetfeldveränderung infolge beispielsweise bewegter Achsen oder bewegter Verzahnungselemente aus einem magnetisierbaren Material vermindert bzw. vermieden. Als amagnetisches Material wird beispielsweise nichtmagnetischer Stahl, insbesondere Edelstahl, Keramik und/oder Kunststoff verwendet. Eine Weiterbildung sieht vor, dass die Volumenmessvorrichtung zumindest annähernd, vorzugsweise vollständig aus amagnetischem Material oder Materialien besteht.

Gemäß einer Weiterbildung sind zumindest die Verzahnungselemente und der Messfühler zumindest teilweise von einer magnetischen Abschirmung umgeben. Die magnetische Abschirmung weist beispielsweise ein weichmagnetisches Material, insbesondere Mu-Metall auf. Vorzugsweise ermöglicht die magnetische Abschirmung zumindest eine Verminderung magnetischer Störeinflüsse beispielsweise durch Elektromotoren oder dergleichen.

Zur Auswertung der Messsignale ist gemäß einer Ausgestaltung wenigstens eine Auswertungseinheit vorgesehen, mit der aus einem insbesondere periodischen Messsignal des Messfühlers eine Abfolge ansteigender oder abfallender Triggerflanken, insbesondere Rechteckimpulse erzeugbar ist, wobei einer vollen Umdrehung wenigstens eines der Verzahnungselemente eine vorbestimmte Anzahl von äquidistanten ansteigenden oder abfallenden Triggerflanken, insbesondere Rechteckimpulsen, zuordbar ist. Das Messsignal des Messfühlers ist beispielsweise bei einer vollen Umdrehung ein sinus- bzw. cosinusförmiges Signal mit wenigstens einer Periode, vorzugsweise zwei Perioden. Vorzugsweise wird ein Sinus- und ein Cosinussignal erzeugt. Zur Erzeugung der abfallenden oder ansteigenden Triggerflanken ist beispielsweise ein Amplitudendiskriminator vorgesehen. Beispielsweise können kontinuierlich ansteigende Flanken und abrupt abfallende Flanken erzeugt werden. Es können jedoch auch abrupt ansteigende und kontinuierlich abfallende Flanken erzeugt werden. Insbesondere können auch abrupt ansteigende und abrupt abfallende Flanken erzeugt werden, wobei insbesondere Rechteckimpulse erzeugbar sind. Des Weiteren können die ansteigenden oder abfallenden Flanken auch mittels einzelner Impulse erzeugt werden. Vorzugsweise kann jeder ansteigenden oder abfallenden Triggerflanke genau ein vorbestimmter Drehwinkel zugeordnet werden. Insbesondere entspricht ein Abstand zwischen jeweils zwei benachbarten ansteigenden oder abfallenden Triggerflanken genau einem Winkel Δω.

So ist beispielsweise ein MR- oder ein AMR-Sensor einsetzbar, mittels dem zwei Perioden über eine Umdrehung erzeugt werden. Wird der MR- oder AMR-Sensor ohne weitere Messanalytik oder entsprechendem Messaufbau eingesetzt, ist mittels diesem in der Regel eine Auflösung der Drehung daher nur über 180° ermöglicht. Vorzugsweise wird daher der MR- oder AMR-Sensor mit einer Messapparatur versehen, die auch eine Messung über 360° ermöglicht. Beispielsweise können hierzu zumindest zwei oder mehr MR- oder AMR-Sensoren miteinander verschaltet sein. Dieses ist aber ebenfalls bei GMR-Sensoren möglich. Prinzipbedingt besteht jedoch die Möglichkeit, mit einem GMR-Sensor 360° einer Drehung detektieren zu können.

Eine Weiterbildung sieht vor, dass zumindest zwei Wheatstone'sche Schaltungen vorgesehen sind, um die Sensoren miteinander abzugleichen bzw. eine Eindeutigkeit der Position zu erzielen. Zwei der Brücken sind dabei um 45° zueinander verdreht. Eine weitere Ausgestaltung sieht vor, dass ein magnetischer Massstab vorgesehen ist. Hierzu können beispielsweise in einem Ring angeordnete abwechselnd polarisierte Magneten möglichst gleicher Pollänge einsetzt werden.

Bei Einsatz eines MR- oder AMR-Sensors beispielsweise ist es bevorzugt, aufgrund dessen quadratischer Winkelabhängigkeit und dadurch bedingter Eindeutigkeit der Position nur über 180° einer Drehung ein zusätzliches, bekanntes Feld zu erzeugen. Dieses kann mit der Sensorkennlinie korreliert und damit eine Mehrdeutigkeit der Sensorkennlinie aufgehoben werden. Eine Ausgestaltung hierfür sieht vor, dass auf einem MR-Sensorchip eine Stromspule integriert ist, mittels der ein derartiges Feld erzeugt werden kann. Beispielsweise kann hierfür der Sensor KMR 360 der Firma HLPlanarTechnik eingesetzt werden. Dieser weist drei Wheatstone'sche Brücken auf, wodurch die Ausgangssignale um 60° verschoben sind. Durch lineare Interpolation kann sodann eine Auflösung über 360° erzielt werden. Alternativ kann über entsprechende algorithmische Lösungen eine Winkelauflösung erfolgen. Beispielsweise kann über eine Zählung der Anzahl der Arctan-Steigungen, die sich aufgrund der vollständig abgeschlossenen Cos- und Sin-Perioden ergeben, die Anzahl der Umdrehungen einerseits und andererseits aufgrund des momentan vorliegenden Arctan-Wertes gebildet aus dem momentan Sin-und Cos-Werts die genaue Position ermittelt werden.

Die Erfindung betrifft weiterhin ein Verfahren zum Messen eines Fluidvolumenstromes mittels einer Volumenmessvorrichtung, insbesondere mittels einer oben beschriebenen Volumenmessvorrichtung und zur Feststellung einer Drehrichtung von Verzahnungselementen aus einem gleichzeitig erzeugten Sinus- und Cosinus-Signal, wobei wenigstens zwei drehbar gelagerte und miteinander kämmende Verzahnungselemente gegeneinander rotiert werden und in einem Kämmbereich ineinandergreifende Zähne der miteinander kämmenden Verzahnungselemente ein Eingang von einem Ausgang abgetrennt wird, wobei eine relative Winkeländerung einer Magnetfeldkomponente über einen Messfühler als Messsignal aufgenommen und daraus der Fluidvolumenstrom ermittelt wird. Beispielsweise wird eine Magnetfeldkomponente zumindest in einer Messebene eines nach dem MR-Prinzip, dem Giant-Magneto-Resistance-Prinzip und/oder dem anisotropen Magnetwiderstands-Prinzip arbeitenden Messfühlers verändert und anhand eines dadurch veränderten Messsignales des Messfühlers das transportierte Volumen ermittelt.

Eine Weiterbildung sieht vor, dass bei einer Umdrehung wenigstens eines der Verzahnungselemente wenigstens ein sinus- und ein cosinusförmiges Signal erzeugt werden. Vorzugsweise ist vorgesehen, dass bei einer einzelnen Umdrehung eines der Verzahnungselemente zumindest jeweils zwei cosinus- und sinusförmige Perioden gemessen werden und daraus auf eine Drehrichtung der Verzahnungselemente geschlossen wird. In einer Ausgestaltung wird bei einer Bewegung wenigstens eines der Verzahnungselemente wenigstens ein sinus- und ein cosinusförmiges Signal erzeugt. Diese sind insbesondere an separaten Messausgängen abgreifbar.

Vorzugsweise wird wenigstens ein festes Messvolumen, welches zumindest zu einem Messzeitpunkt in wenigstens einem Zahnzwischenraum zwischen benachbarten Zähnen eines Verzahnungselementes und einer Gehäusewand eingeschlossen wird, vom Eingang zum Ausgang transportiert.

Die Messebene ist insbesondere die Ebene, in der die MR-Schichten, AMR-Schicht und/oder GMR-Schichten angeordnet sind. Vorzugsweise weist das Magnetfeld auch eine Komponente senkrecht zur Messebene auf. Vorzugsweise wird das Messsignal periodisch mit einer Umdrehung variiert. Dabei ist insbesondere ein mehrfache ganzzahlige Periodizität vorgesehen.

In einer ersten Ausgestaltung ist vorgesehen, dass die Magnetfeldkomponente mittels eines synchron mit wenigstens einem der Verzahnungselemente drehenden Magnetfelds verändert wird. Das drehende Magnetfeld wird dabei beispielsweise mittels einer Magnetfelderzeugungseinrichtung, insbesondere eines Permanentoder eines Elektromagneten erzeugt.

in einer weiteren Ausgestaltung wird die Magnetfeldkomponente verändert, indem magnetische Feldlinien eines ortsfesten Magneten mittels wenigstens eines der Verzahnungselemente abgelenkt werden. Vorzugsweise weist das Verzahnungselement zumindest in einem Teilbereich ein magnetisches Material auf. Insbesondere ist das magnetische Material weichmagnetisch.

Gemäß einer Weiterbildung weist das Messsignal bei einer Umdrehung wenigstens eines der Verzahnungselemente eine eineindeutige Zuordnung von dessen Position zum Messsignal auf. Diese Zuordnung kann aus dem Nordpol und dem Südpol und deren zugeordneten Magnetflusslinien gewonnen werden. Auch besteht die Möglichkeit, zwei Magnete zu verwenden. Beispielsweise sind dem Messfühler gegenüber liegend jeweils zwei magnetische Nordpole und zwei magnetische Südpole angeordnet. Diese sind insbesondere so angeordnet, dass diese mit einem Verzahnungselement synchron mitdrehen.

Vorzugsweise zur Digitalisierung des Messsignales ist vorgesehen, dass aus dem Messsignal eine Abfolge Impulse erzeugt wird. Beispielsweise ist vorgesehen, dass aus dem Messsignal die sinus- und cosinusförmigen Signale und daraus eine Abfolge von Trigger-Signalen erzeugt wird. Eine Ausgestaltung sieht vor, dass bei einer vollen Umdrehung wenigstens eines der Verzahnungselemente eine vorbestimmte Anzahl von, bezogen auf die volle Umdrehung, von äquidistanten, ansteigenden oder abfallenden Triggerflanken, insbesondere Rechteckimpulsen, zugeordnet wird. Beispielsweise wird das Messsignal mittels eines Amplitudendiskriminators analysiert und eine entsprechende Zuordnung vorgenommen. Beispielsweise erfolgt dies anhand eines Vergleiches mit einer Kalibrier- bzw. Sollkurve. Diese kann beispielsweise berechnet oder vorzugsweise vorab gemessen werden. Insbesondere entspricht ein äquidistanter Abstand zwischen aufeinander folgenden jeweils ansteigenden oder abfallenden Triggerflanken einer vorgegebenen Winkelinkrementierung.

In einer Variante ist vorgesehen, dass pro voller Umdrehung wenigstens 32, bevorzugt wenigstens 64 und insbesondere wenigstens 128 ansteigende oder abfallende Triggerflanken, insbesondere Rechteckimpulse erzeugt werden. Vorzugsweise übersteigt die Anzahl der Impulse pro volle Umdrehung die Anzahl der Zähne pro Zahnrad um wenigstens den Faktor 2.

Neben der Möglichkeit, auch eine höhere Anzahl von Trägerflanken aufnehmen zu können, auch außerhalb einer, durch beispielsweise einen 8-Bit-Sensor vorgegebenen Abtastrate, beispielsweise durch einen 10-Bit-Sensor oder einen noch höher auflösenden Sensor, besteht die Möglichkeit, höhere Abtastraten vorzusehen. Die Abtastrate kann beispielsweise grösser 200 pro volle Umdrehung eines Zahnrades sein. Eine weitere Möglichkeit, eine Abtastung bzw. Auflösung des Messergebnisses zu verbessern, besteht darin, statt einer digitalen eine analoge Auflösung vorzusehen. Durch Auswertung des aufgenommenen, beispielsweise analogen Messsignals kann ebenfalls eine genaue Auswertung ermöglicht werden.

Gemäß einer Weiterbildung wird anhand des Messsignals wenigstens eines Messfühlers eine Drehrichtung wenigstens eines Verzahnungselementes ermittelt. Beispielsweise kann die Drehrichtung ermittelt werden, indem ein sinusförmiges und ein cosinus- förmiges Signal des Messfühlers ausgewertet werden. Alternativ oder zusätzlich können auch verschiedene Signale verschiedener Messfühler ausgewertet werden.

Gemäß einem weiteren Gedanken, der insbesondere auch als selbstständiger Gedanke weiterverfolgt werden kann, ist eine Volumenmessvorrichtung vorzugsweise wie oben beschrieben vorgesehen, bei der jedem Verzahnungselement ein Messfühler zugeordnet ist, wobei zumindest in einem der beiden Verzahnungselemente ein erstes und ein zweites Detektierungselement, vorzugsweise eine erste und eine zweite Magnetfelderzeugungseinrichtung angeordnet sind, die voneinander unterscheidbar sind. Beispielsweise ist vorgesehen, dass die Verzahnungselemente entweder gleich groß oder aber möglichst in einem gleichzahligem Verhältnis zueinander hinsichtlich ihrer Größe stehen. Dreht sich beispielsweise das eine Verzahnungselement einmal vollständig um sich selbst, hat sich das andere Verzahnungselement beispielsweise zur Hälfte, zu einem Viertel, zu einem Achtel oder einem Sechzehntel gedreht. Durch die Überwachung jedes Verzahnungselementes durch jeweils zumindest einen Messfühler besteht die Möglichkeit, dass mittels des einen Messfühlers ein hinsichtlich der Position und insbesondere Drehrichtung relevantes Messsignal aufgenommen werden kann, während das andere Messsignal relevant für das Fortschreiten einer Umdrehung ist. Vorzugsweise wird mittels einer Korrelation hinsichtlich Messsignalen bezüglich jeweils beider miteinander kämmender Verzahnungselemente eine Aussage in Bezug zu einer vollständigen Umdrehung zumindest eines der beiden Verzahnungselemente und/oder zu einer Position zumindest einer der beiden Verzahnungselemente ermittelt.

Eine Weiterbildung sieht vor, dass in einem der beiden Verzahnungselemente als erste und zweite Magnetfelderzeugungseinrichtung jeweils ein Magnet mit Nord- und Südpol angeordnet wird, wobei jedoch die magnetische Ausrichtung jeweils umgekehrt zueinander im Verzahnungselement angeordnet ist. Auf diese Weise ist eindeutig definiert, wann der erste und wann der zweite Magnet im Bereich des Messfühlers ein- bzw. austritt. Werden die beiden Magnete um 180 Grad versetzt im Verzahnungselement angeordnet, kann auf diese Weise insbesondere eine eindeutige Zuordnung von beispielsweise hinsichtlich des anderen Verzahnungselementes über 360 Grad erfolgte Messsignale aus zwei Halbperioden von jeweils 180 Grad erfolgen. So werden die Messsignale, die nach einem Detektion des Magneten am anderen Verzahnungselement erfolgen, einer ersten Halbperiode zugeordnet. Durchtritt der zweite Magnet wiederum den Messfühler, werden die anschließend aufgenommenen Messwerte der nachfolgenden Halbperiode zugeordnet, so dass sich insgesamt eine Vollperiode in eindeutiger Weise ergibt. Vorzugsweise ist vorgesehen, dass anstatt von zwei Magneten auch eine Mehrzahl an derartigen Magneten in dem Verzahnungselement angeordnet sein können, insbesondere wenn dadurch die Auflösung des am anderen Verzahnungselement gewonnenen Messsignals durch entsprechende Korrelation ermöglicht wird. Eine weitere Ausgestaltung sieht vor, dass an einem ersten Zahnrad ein beispielsweise AMR-Sensor angeordnet ist, während an einem damit zweiten kämmenden Zahnrad ein anderer Messfühler, insbesondere ein MR-Sensor angeordnet ist. In dem zweiten Zahnrad sind ein erster und ein zweiter Magnet jeweils um 180 Grad versetzt zueinander mit umgekehrter Polung eingebaut. Der erste Magnet weist eine Nord-Süd-Ausrichtung auf, während der zweite Magnet eine Süd-Nord-Ausrichtung aufweist. Der dem zweiten Zahnrad zugeordnete Messfühler in Form eines MR-Sensors kann bei Überfahren durch den jeweiligen Magneten in eine erste Position und bei Überschreiten des zweiten Magneten in eine zweite, davon unterscheidbare Position geschaltet werden oder eine derartige Umschaltung bewirken. Beispielsweise kann dieses in Form einer 0-1 -Digitalisierung erfolgen. Durch Zuordnung dieser jeweiligen Position zu durch den zweiten Messfühler, insbesondere dem AMR-Sensor aufgenommenen Messsignalen, kann eine eindeutige Positionszuordnung hinsichtlich einer ersten halben Zahnradumdrehung des ersten Zahnrades und einer entsprechenden zweiten halben Zahnradumdrehung des ersten Zahnrades erfolgen. Wird mittels des AMR-Sensors eine Sinus- und Cosinuskurve aufgenommen, besteht darüber insbesondere die Möglichkeit, einer ersten Periode des Sinus- bzw. Cosinussignals das eine, vom zweiten Zahnrad erhaltene Signal zuzuordnen, während der zweiten Periode das andere Signal zugeordnet wird, das über das zweite Zahnrad ermittelt wird.

Schließlich betrifft die Erfindung ein Computerprogrammprodukt mit Programmcodemitteln, welche auf einem computerlesbaren Speichermedium gespeichert werden, um ein Verfahren insbesondere gemäß einer der vorstehend beschriebenen Ausgestaltungen auszuführen, wenn ein die Programmcodemittel umfassendes Programm auf einem Computer aufgeführt wird. Ein computerlesbares Speichermedium ist beispielsweise ein magnetisches, magneto-optisches, optisches, elektronisches oder magneto-elektronisches Speichermedium. Des Weiteren kann beispielsweise ein Fernspeicher, insbesondere in einem Computernetzwerk vorgesehen sein. Vorzugsweise ist das Speichermedium ein Speicherchip eines MikroControllers. Eine derartige Anwendung ist vorteilhaft, wenn die Volumenmessvorrichtung in Anlagen, insbesondere chemischen Anlagen betrieben wird, die über eine entsprechende Signalübertragung verfügen, um die aufgenommenen Messsignale in einer Fernwarte zumindest darzustellen, insbesondere aber auch dort oder davor auszuwerten.

Im Folgenden wird die Erfindung anhand der Zeichnung im Einzelnen beispielhaft erläutert. Die dort dargestellten Merkmalskombinationen sind jedoch nicht beschränkend aus-zulegen. Vielmehr sind jeweils in der Beschreibung einschließlich der Figurenbeschreibung sowie in der Zeichnung enthaltene Merkmale zu Weiterbildungen miteinander kombinierbar. Es zeigen:
Fig. 1 : eine schematische Ansicht einer ersten Ausgestaltung einer Volumenmessvorrichtung,
Fig. 2: einen schematischen Längsschnitt einer zweiten Ausgestaltung einer Volumenmessvorrichtung,
Fig. 3: eine schematische Detailansicht eines Längsschnittes einer dritten Ausgestaltung einer Volumenmessvorrichtung,
Fig. 4: eine schematische Detailansicht der dritten Ausgestaltung,
Fig. 5: einen schematischen Längsschnitt einer vierten Ausgestaltung einer Volumenmessvorrichtung,
Fig. 6: eine schematische Detailansicht der vierten Ausgestaltung in einer Abwandlung,
Fig. 7: einen Verlauf eines Messsignals, und
Fig. 8: eine weitere schematische Ausgestaltung einer Volumenmessvorrichtung.

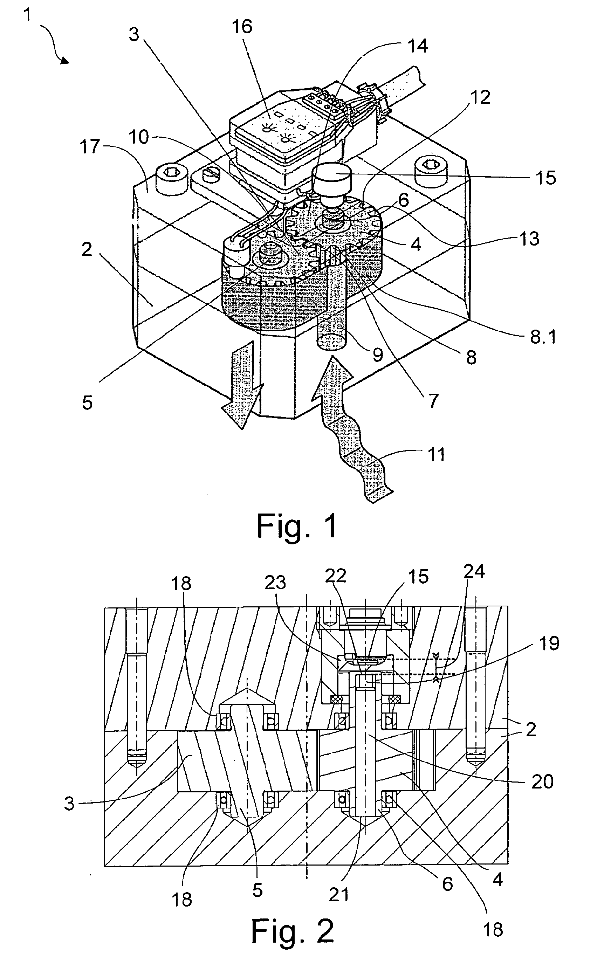

Figur 1 zeigt eine Ansicht einer ersten Ausgestaltung einer Volumenmessvorrichtung 1. In einem Gehäuse 2 sind ein erstes Zahnrad 3 und ein zweites Zahnrad 4 mit einer ersten Welle 5 und einer zweiten Welle 6 drehbar gelagert. Die Zahnräder 3, 4 sind dabei so angeordnet, dass diese in einem Kämmbereich 7 miteinander kämmen. Des Weiteren sind die Zahnräder 3; 4 in einer Messkammer 8 so angeordnet, dass kein direkter Strompfad von einem Zulauf 9 zu einem Ablauf 10 vorgesehen ist. Ein Transport eines schematisch dargestellten Fluids 11 erfolgt ausschließlich über beim Kämmen gebildete Taschen 12 in einem jeweiligen Zahnzwischenraum 13 der Zahnräder 3, 4. Die Taschen 12 sind dabei von einer Wand 8.1 der Messkammer 8 sowie nicht dargestellten Stirnwänden der Messkammer 8 und dem ersten Zahnrad 3 bzw. dem zweiten Zahnrad 4 begrenzt. Die zweite Welle 6 ist mit einem nicht im Einzelnen dargestellten Magneten versehen. Einer Stirnfläche 14 des zweiten Zahnrades 4 gegenüberliegend ist ein Messfühler 15 angeordnet. In einer nicht dargestellten Variante kann zusätzlich ein Bypass zwischen Zulauf 9 und Ablauf 10 vorgesehen sein.

Daneben weist die Volumenmessvorrichtung 1 eine Auswertungseinheit 16 auf, welche an einer Oberseite 17 des Gehäuses 2 angeordnet ist. Diese Auswertungseinheit umfasst eine nicht im Einzelnen dargestellte Mikrocontroller-Einheit. Im Folgenden werden gleich wirkende Elemente mit den gleichen Bezugszeichen versehen.

Figur 2 zeigt einen schematischen Längsschnitt einer zweiten Ausgestaltung einer Volumenmessvorrichtung 1. Diese entspricht im Wesentlichen der in Figur 1 gezeigten ersten Ausgestaltung. Der Schnitt ist dabei so gelegt, dass die Schnittebene eine erste Welle 5 und eine zweite Welle 6 eines ersten Zahnrades 3 und eines zweiten Zahnrades 4 längs schneidet. Die Wellen 5, 6 und somit die Zahnräder 3, 4 sind jeweils mittels Wälzlagern 18 drehbar in einem Gehäuse 2 gelagert. Das zweite Zahnrad 4 ist mit einem Magneten 19 versehen, welcher in einer Bohrung 20 in der zweiten Welle 6 aufgenommen ist. Zur hermetischen Kapselung ist ein mittels einer Verschweißung aufgebrachter Deckel 21 vorgesehen. Anstelle einer Verschweißung kann beispielsweise auch eine Verklebung vorgesehen sein.

Gegenüber einer Stirnseite 22 des Magneten 19 ist ein Messfühler 15 angeordnet. Bei diesem Messfühler handelt es sich um einen Drehsensor, welcher nach dem GMR-Prinzip, dem MR-Prinzip oder dem AMR-Prinzip arbeitet. Zwischen dem Messfühler 15 und der Stirnseite 22 des Magneten 19 ist eine druckfeste Trennwand 23 vorgesehen. Die druckfeste Trennwand 23 ist dabei so bemessen, dass ein vorgegebener Abtastabstand 24 genau eingehalten wird. Aufgrund der Druckfestigkeit der Trennwand 23 wird dieser vorgegebene Abtastabstand 24 nicht variiert.

Der Magnet 19 ist, nicht im Einzelnen dargestellt, so ausgestaltet, dass er an seiner Stirnseite 22 einen Nordpol und einen Südpol aufweist. Diese sind vorzugsweise in Halbkreisen an der Stirnseite 22 des Magneten 19 angeordnet. In einer nicht dargestellten Ausgestaltung können auch zwei Nordpole und zwei Südpole vorgesehen sein, welche jeweils in Quadranten angeordnet sind.

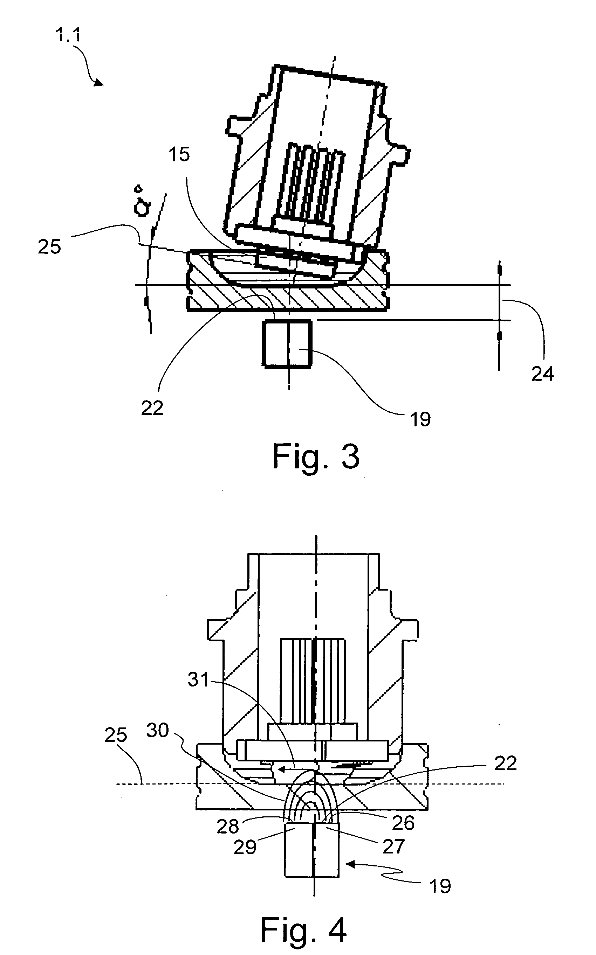

Figur 3 zeigt eine schematische Detailansicht eines Längsschnittes einer dritten Ausgestaltung einer Volumenmessvorrichtung 1. Diese entspricht im Wesentlichen der in Figur 2 gezeigten zweiten Ausgestaltung, wobei jedoch im Unterschied dazu eine Messebene 25 eines Messfühlers 15 um einen Winkel α gegenüber einer Stirnseite 22 eines Magneten 19 verkippt ist. Zur besseren Übersicht sind sowohl die in der Figur 2 gezeigte zweite Welle als auch das zweite Zahnrad nicht dargestellt. Ein nicht dargestelltes Magnetfeld am Ort des Messfühlers 15 weist sowohl eine parallel zur Messebene 25 ausgerichtete Komponente als auch eine senkrecht dazu ausgerichtete Komponente auf. Insbesondere ermöglicht dies eine magnetische Vorspannung des Messfühlers 15. Unter einem Abtastabstand 24 ist der kürzeste senkrechte Abstand zur Stirnseite des Magneten 19 zu verstehen.

Figur 4 zeigt eine schematische Detailansicht der zweiten Ausgestaltung einer Volumenmessvorrichtung.

Zur besseren Übersicht sind sowohl die in der Figur 2 gezeigte zweite Welle als auch das zweite Zahnrad nicht dargestellt. Des Weiteren ist der Magnet 19 dargestellt, welcher in einem ersten Halbkreis 26 der Stirnfläche 22 einen Südpol 27 und in einem zweiten Halbkreis 28 einen Nordpol 29 aufweist. Ein schematisch dargestelltes Magnetfeld 30 ist dabei so ausgestaltet, dass es eine zu einer Messebene 25 parallele Komponente 31 aufweist. Bei einer Rotation der nicht dargestellten zweiten Welle rotiert folglich die parallele Komponente 31 des Magnetfeldes 30 in der Messebene 25. Ein nicht dargestelltes Messsignal zeigt bei einer vollen Umdrehung der nicht dargestellten zweiten Achse eine zweifache Periodizität. Das Messsignal umfasst dabei vorzugsweise ein Sinus- und ein Cosinussignal. Es kann jedoch auch vorgesehen sein, lediglich ein Sinus- oder ein Cosinussignal bereitzustellen.

In einer nicht dargestellten Variante können jeweils mehrere, insbesondere jeweils zwei, Nordpole und Südpole verwendet werden. Beispielsweise kann der Magnet 19 auch in einem der Zahnräder angebracht sein. Vorzugsweise werden mehrere Magnete in den Zahnrädern angeordnet. Zur Bereitstellung mehrerer Nord- und Südpole kann beispielsweise wenigstens ein Ringmagnet verwendet werden. Vorzugsweise ermöglicht die Verwendung mehrerer Nord- und Südpole eine Erhöhung der Zählimpulsanzahl pro Umdrehung gegenüber einer Ausgestaltung mit nur jeweils einem Nord- bzw. Südpol.

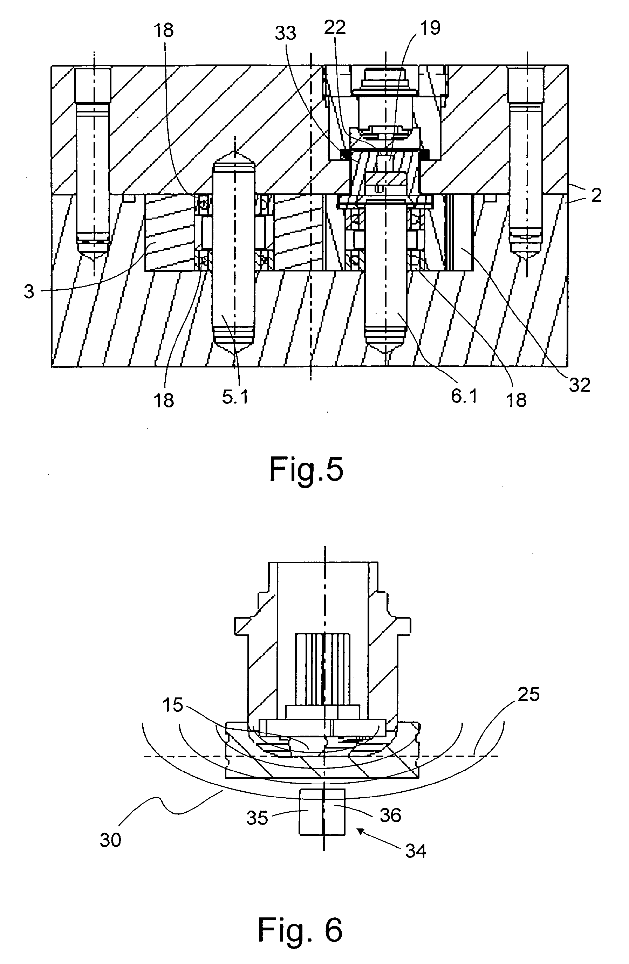

Figur 5 zeigt einen schematischen Längsschnitt einer vierten Ausgestaltung einer Volumenmessvorrichtung 1. Im Unterschied zu den vorstehend dargestellten Ausgestaltungen weist diese anstelle von Wellen eine erste Achse 5.1 und eine zweite Achse 6.1 sowie ein Sonderzahnrad 32 auf. Dieses weist an einer Stirnfläche 14 einen becherförmigen Magnethalter 33 auf. Dieser ist in ein Sonderzahnrad 32 eingeschraubt, eingeklebt, eingeschweißt oder dergleichen. In dem Magnethalter 33 ist ein Magnet 19 eingesetzt, welcher an einer Stirnseite 22 jeweils zwei Nordpole und zwei Südpole aufweist. Die Achsen 5.1 , 6.1 sind jeweils drehfest mit einem Gehäuse 2 verbunden. Ein erstes Zahnrad 3 und das Sonderzahnrad 32 sind jeweils mittels eines Wälzlagers 18 drehbar an den Achsen 5.1 , 6.1 gelagert. Figur 6 zeigt eine schematische Detailansicht der vierten Ausgestaltung in einer Abwandlung. Die Detailansicht entspricht im Wesentlichen der in Figur 4 gezeigten schematischen Detailansicht der zweiten Ausgestaltung. Im Unterschied dazu ist jedoch kein Magnet vorgesehen, sondern ein Magnetfeldveränderungselement 34, welches halbkreisweise alternierend ein magnetisierbares Material 35 und ein amagnetisches Material 36 aufweist. Das magnetisierbare Material 35 ist dabei ein weichmagnetisches Material. Bei einer Drehung der Magnetfeldveränderungsvorrichtung 34 wird ein von nicht dargestellten Magneten erzeugtes Magnetfeld 30 mit einer Umdrehung periodisch verändert. Durch das magnetisierbare Material 35 wird jeweils ein Teil des Magnetfeldes magnetisch kurzgeschlossen. Bei der Drehbewegung wird eine parallel zu einer Messebene 25 eines Messfühlers 15 ausgerichtete Magnetfeldkomponente verändert. Aufgrund des jeweils in zwei Halbkreisen alternierend angeordneten magnetisierbaren Materials 35 und des amagnetischen Materials 36 wird bei einer vollen Umdrehung einer nicht dargestellten zweiten Achse eines ebenfalls nicht dargestellten zweiten Zahnrades ein Signal mit einer zweifachen Periodizität erzeugt. In einer anderen Ausgestaltung kann auch eine quadrantenweise alternierende Anordnung von magnetisierbarem und amagnetischem Material vorgesehen sein. In diesem Fall wird eine vierfache Periodizität erzeugt. Entsprechend können auch andere Anordnungen von magnetisierbarem und amagnetischem Material vorgesehen sein.

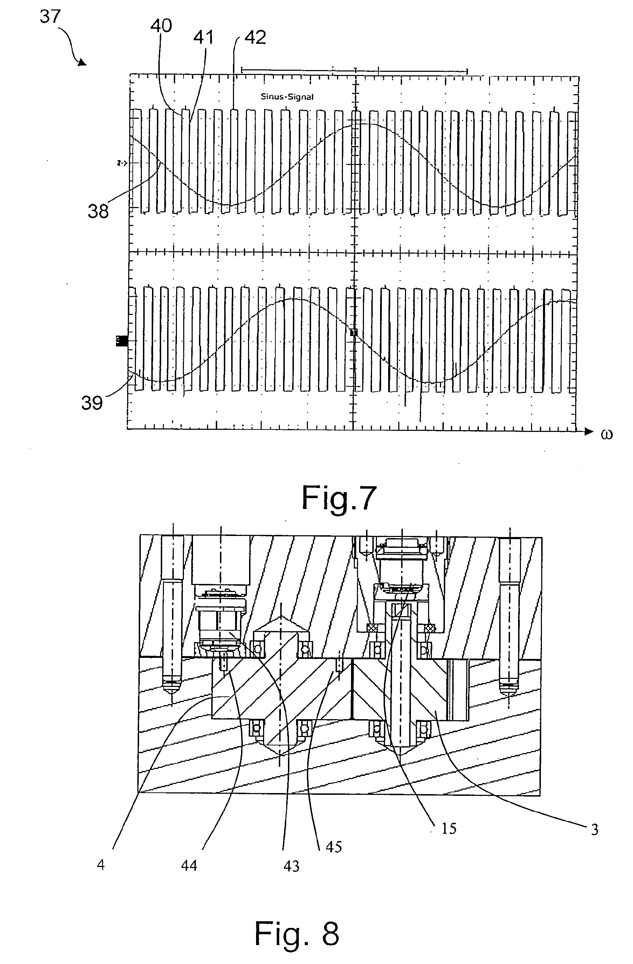

Figur 7 zeigt einen Verlauf eines Messsignals 37. Dargestellt ist ein erstes Messsignal 38 und ein zweites Messsignal 39 eines Drehsensors. Das Signal ist dabei mit einer Anordnung gemäß beispielsweise der zweiten Ausgestaltung aufgenommen. Das erste Messsignal 38 ist dabei ein Sinus-Signal und das zweite Messsignal 39 ist dabei ein Cosinus-Signal. Auf der Abszisse ist ein Drehwinkel co dargestellt, welcher einem Drehwinkel beispielsweise des zweiten Zahnrades in Figur 2 entspricht. Das erste Messsignal 38 und das zweite Messsignal 39 sind dabei für annähernd eine etwa eine halbe Umdrehung dargestellt. Bei einer vollen Umdrehung weisen die beiden Messsignale 38; 39 genau zwei Perioden auf. Zur Digitalisierung des Messsignals wird mittels einer Auswertungseinheit aus dem ersten Messsignal 38 eine in Bezug auf den Drehwinkel ω äquidistante Abfolge ansteigender Triggerflanken 40 bzw. abfallender Triggerflanken 41 erzeugt. Diese Triggerflanken 40; 41 werden anhand eines Vergleichs des ersten Messsignals 38 mit jeweils vorgegebenen oberen und unteren Schwellwerten bei einer gegebenen Winkelposition ermittelt. Ansteigende und abfallende Triggerflanken 40; 41 bilden dabei jeweils einen Rechteckimpuls 42. Jeweils zwei aufeinander folgende Rechteckimpulse sind insofern äquidistant in Bezug auf den Drehwinkel ω beabstandet. Damit kann mittels der Auswerteinheit ein digitalisiertes Volumenmessgerät bereitgestellt werden. In ähnlicher Weise wird auf dem zweiten Messsignal 39 ebenfalls eine Abfolge von Rechteckimpulsen generiert.

Zur Bestimmung einer Drehrichtung des Verzahnungselementes werden die jeweiligen Amplituden des ersten Messsignals 38 und des zweiten Messsignals 39 betrachtet. Aufgrund einer vorliegenden Phasenverschiebung der Messsignale 38; 39 kann auf die Drehrichtung geschlossen werden.

Fig. 8 zeigt eine weitere Ausgestaltung der Volumenmessvorrichtung 1 mit einem ersten Verzahnungselement 3 und einem zweiten Verzahnungselement 4. Das Gehäuse ist so geteilt, dass in einer Gehäusehälfte die Verzahnungselemente 3, 4 mit einem Teil ihrer Lagerung eingebracht werden können. Im anderen Teil des Gehäuses wird die gegenüberliegende Lagerung in eine entsprechende Ausnehmungen eingefügt. Darüber hinaus sind in diesem Teil des Gehäuses auch ein erster Messfühler 15 und ein zweiter Messfühler 43 angeordnet. Während im ersten Verzahnungselement 3 beispielsweise eine Anordnung hinsichtlich einer Magnetfelderzeugungsvorrichtung vorgesehen ist, wie sie auch schon hinsichtlich

Fig. 2 beschrieben ist, so kann der erste Messfühler 15 insbesondere ein MR-Messfühler sein. Das zweite Verzahnungselement 4 weist vorzugsweise einen ersten Magneten 44 und einen zweiten Magneten 45 auf. Diese sind jedoch hinsichtlich ihrer Polung unterschiedlich angeordnet. Sie können jedoch auch unterschiedlich schräg angeordnet sein oder in sonstiger, voneinander unterscheidbarer Weise. Anstatt des Einsatzes von Magneten können jedoch auch Magnetfeldänderungselemente eingesetzt werden, die eine unterschiedliche Änderung eines ansonsten eventuell stationär vorliegenden Magnetfeldes im zweiten Gehäuse so ändern, dass der Messfühler 43 den Unterschied des Durchgangs des einen oder des anderen Magnetfeldänderungselementes genau detektieren kann. Mittels des ersten und des zweiten Magneten 44, 45 besteht die Möglichkeit, aufgrund des miteinander Kämmens vom ersten und zweiten Verzahnungselement 3, 4 eine zusätzliche Messinformation über den Messfühler 43 zu erhalten, die mit den Messsignalen, die vom ersten Messfühler 15 ermittelt werden, korreliert werden können. Insbesondere kann bei Nutzung eines AMR-Sensors oder MR-Sensors als ersten Messfühler 15 eine Auflösung hinsichtlich einer halben Umdrehung des Verzahnungselements 3 erfolgen; über den zweiten Messfühler 43 gelingt es, eine Auflösung dahingehend zu erzeugen, dass es sich noch um die erste Halbumdrehung oder schon um die zweite Halbumdrehung des Verzahnungselementes 3 handelt. Als Messfühler 43 kann beispielsweise ein MR-Sensor genutzt werden. Es ist jedoch auch der Einsatz eines anderen Messfühlers oder eines anderen Messsystems möglich, mittels dem aufgrund der konstruktiv gegebenen Korrelation zwischen dem ersten Verzahnungselement 3 und dem zweiten Verzahnungselement 4 eine entsprechende Zuordnung von mittels des ersten Messfühlers 15 aufgenommenen Messsignalen zu einem bestimmten Umdrehungsabschnitt des Verzahnungselementes 3 ermöglicht wird. Dieses ist beispielsweise auch mittels eines Hall-Sensors, einer Flip-Flop-Schaltung oder Ähnlichem möglich. Dieses kann vorzugsweise abstandslos erfolgen. Es besteht jedoch ebenfalls die Möglichkeit, dass durch einen entsprechenden Kontakt, beispielsweise in Form eines Schleifkontaktes oder eines Unterbrecherkontaktes, eine derartige Signalauslösung am Messfühler 43 erfolgt, die eine Zuordnung eines insbesondere mittels eines AMR-Sensors oder MR-Sensors aufgenommenen Messsignals hinsichtlich des Verzahnungselementes 3 ermöglicht.

Die Volumenmessvorrichtung bzw. das vorgeschlagene Verfahren werden vorzugsweise in chemischen Anlagen, in lebensmitteltechnischen Anlagen, in Lackieranlagen wie auch in Anlagen zur Bereitstellung von genau zu dosierenden Ausgangsprodukten eingesetzt. Auch kann die Volumenmessvorrichtung bzw. das Verfahren nicht nur dort eingesetzt werden, wo ein Fluid abgegeben wird, sondern auch dort, wo ein Fluid aufgenommen wird, zum Beispiel bei der Befüllung eines Fluidspeichers. Auch besteht die Möglichkeit, dass eine Abrechnungseinheit für eine finanzielle Abrechnung des Fluidvolumenstromes direkt mit der Volumenmessvorrichtung gekoppelt ist. So kann beispielsweise eine Gutschrift, eine Lastschrift wie auch eine entsprechende Buchung beispielsweise direkt verlinkt über die Volumenmessvorrichtung ausgelöst werden. Weiterhin kann die Volumenmessvorrichtung in Bereichen eingesetzt werden, bei denen das zu messende Fluid Temperaturen zwischen 150 °C bis 290 °C aufweist. Auch bei abgekühlten Fluiden in Temperaturbereichen von weniger als -10 °C kann die Volumenmessvorrichtung eingesetzt werden.

## Patentansprüche

1. Volumenmessvorrichtung (1) zur Messung eines Fluidvolumenstroms (11) mittels wenigstens zwei in einer Messkammer (8) drehbar gelagerter und miteinander kämmender Verzahnungselemente (3; 4), wobei die Messkammer für den Fluidvolumenstrom (11) einen Eingang (9) und einen Ausgang (10) aufweist, in der Messkammer in einem Kämmbereich (7) durch ineinandergreifende Zähne der miteinander kämmenden Verzahnungselemente (3; 4) eine Trennung zwischen dem Eingang (9) und dem Ausgang (10) gebildet wird und ein vom Eingang (9) zum Ausgang (10) transportierter Fluidvolumenstrom (11) in Abhängigkeit von einer Umdrehungsbewegung von zumindest einem der Verzahnungselemente aufnehmbar ist, wobei wenigstens ein berührungslos arbeitender Messfühler (15) zur Bewegungsdetektierung des Verzahnungselementes anhand eines sich relativ zum Messfühler ändernden Magnetfeldes (30) vorgesehen ist, wobei die Volumenmessvorrichtung (1) in Abhängigkeit eines durch den Messfühler (15) aufgenommen Messsignals jeweils zumindest ein Cosinus- und ein Sinussignal zu einer weiteren Signalauswertung erzeugt, **dadurch gekennzeichnet, dass** der Messfühlers (15) eine Winkeländerung magnetischer Feldlinien detektiert und nach einem MR-Prinzip oder AMR-Prinzip arbeitet, wobei eine dem Messfühler (15) zugeordnete Magnetfelderzeugungseinrichtung (19) ein diametraler Magnet mit mindestens zwei Polen ist, und dass die Magnetfelderzeugungseinrichtung (19) oder eine Magnetfeldänderungsvorrichtung (34) in einem Hohlraum(20) einer Welle (5; 6) eines Verzahnungselementes (3; 4) angeordnet ist, welcher hermetisch vom Fluidvolumen (11) getrennt ist.

2. Volumenmessvorrichtung (1) nach wenigstens einem der vorhergehenden Ansprüche, **dadurch gekennzeichnet, dass** eine druckfeste Trennwand (23) zwischen der Messkammer (8) und dem Messfühler (15) angeordnet ist, wobei die Trennwand (23) amagnetisch ist.

3. Volumenmessvorrichtung nach wenigstens einem der vorhergehenden Ansprüche, **dadurch gekennzeichnet, dass** jedem Verzahnungselement (3, 4) ein Messfühler (15) zugeordnet ist.

4. Verfahren zum Messen eines Fluidvolumenstroms (11) mittels einer Volumenmessvorrichtung (1), wobei wenigstens zwei drehbar gelagerte und miteinander kämmende Verzahnungselemente (3; 4) gegeneinander durch den Fluidvolumenstrom rotiert werden, wobei in einem Kämmbereich (7) ineinandergreifende Zähne der miteinander kämmenden Verzahnungselemente (3; 4) einen Eingang (9) von einem Ausgang (10) für den Fluidvolumenstrom trennen, wobei eine relative Winkeländerung einer Magnetfeldkomponente (31) über einen Messfühler (15) als Messsignal aufgenommen und daraus der Fluidvolumenstrom ermittelt wird, wobei eine Drehung wenigstens eines der Verzahnungselemente (3; 4) wenigstens ein sinus- und ein cosinusförmiges Signal (38; 39) erzeugt, **dadurch gekennzeichnet, dass** der Messfühler (15) eine Winkeländerung magnetischer Feldlinien detektiert und nach einem MR-Prinzip oder AMR-Prinzip arbeitet, wobei eine dem Messfühler (15) zugeordnete Magnetfelderzeugungseinrichtung (19) ein diametraler Magnet mit mindestens zwei Polen ist, und dass die Magnetfelderzeugungseinrichtung (19) oder eine Magnetfeldänderungsvorrichtung (34) in einem Hohlraum(20) einer Welle (5; 6) eines Verzahnungselementes (3; 4) angeordnet ist, welcher hermetisch vom Fluidvolumen (11) getrennt ist.

5. Verfahren nach Anspruch 4, **dadurch gekennzeichnet, dass** aus dem Messsignal (38; 39) über die Sinus- und Cosinussignale eine Abfolge von Triggersignalen erzeugt wird.

6. Verfahren nach wenigstens einem der Ansprüche 4 und 5, **dadurch gekennzeichnet, dass** pro voller Umdrehung eines Verzahnungselementes wenigstens 32, bevorzugt wenigstens 64 und insbesondere wenigstens 128 ansteigende oder abfallende Triggerflanken (40; 41), insbesondere Rechteckimpulse (42), oder mehr erzeugt werden.

7. Verfahren nach einem der vorhergehenden Ansprüche, **dadurch gekennzeichnet, dass** anhand des Mess-Signals (38, 39) wenigstens eines Messfühlers (15) eine Drehrichtung wenigstens eines Verzahnungselementes (3, 4) ermittelt wird.

8. Verfahren nach einem der vorhergehenden Ansprüche, **dadurch gekennzeichnet, dass** mittels einer Korrelation hinsichtlich von Messsignalen bezüglich jeweils beider miteinander kämmender Verzahnungselemente (3, 4) eine Aussage in Bezug zu einer vollständigen Umdrehung zumindest eines der beiden Verzahnungselemente (3, 4) und/oder zu einer Position zumindest eines der beiden Verzahnungselemente ermittelt wird.

9. Verfahren nach einem der vorhergehenden Ansprüche, **dadurch gekennzeichnet, dass** aus einem Cosinus- und einem Sinus-Signal über eine daraus gewonnene Arctan-Beziehung auf eine Position und/oder eine Anzahl von Umdrehungen von zumindest einem der Verzahnungselemente geschlossen wird.

## Claims

1. Volumetric flow meter (1) for measuring a fluid volume flow (11) by means of at least two toothed elements (3; 4) that are rotatably mounted in a measuring chamber (8) and mesh with one another, the measuring chamber for the fluid volume flow (11) having an inlet (9) and an outlet (10), a separation between the inlet (9) and the outlet (10) being formed in the measuring chamber in a meshing area (7) by means of inter-engaging teeth of the intermeshing toothed elements (3; 4), and it being possible for a fluid volume flow (11) transported from the inlet (9) to the outlet (10) to be picked up on the basis of a rotational movement of least one of the toothed elements, at least one measuring sensor (15) operating without contact being provided for detecting the movement of the toothed element by using a magnetic field (30) that changes relative to the measuring sensor, the volumetric flow meter (1) respectively generating at least one cosine and one sine signal for further signal evaluation on the basis of a measured signal picked up by the measuring sensor (15), **characterized in that** the measuring sensor (15) detects an angular change of magnetic field lines and operates in accordance with an MR principle or AMR principle, a magnetic field generating device (19) assigned to the measuring sensor (15) being a diametric magnet with at least two poles, and
**in that** the magnetic field generating device (19) or a magnetic field changing device (34) is arranged in a hollow space (20), which is isolated hermetically from the fluid volume (11), in a shaft (5; 6) of a toothed element (3; 4).

2. Volumetric flow meter (1) according to at least one of the preceding claims, **characterized in that** a pressure-tight partition (23) is arranged between the measuring chamber (8) and the measuring sensor (15), the partition (23) being non-magnetic.

3. Volumetric flow meter according to at least one of the preceding claims, **characterized in that** each toothed element (3; 4) is assigned a measuring sensor (15).

4. Method for measuring a fluid volume flow (11) by means of a volumetric flow meter (1), at least two toothed elements (3; 4) that are rotatably mounted and mesh with one another being rotated with respect to each other by the fluid volume flow, inter-engaging teeth of the intermeshing toothed elements (3; 4) in a meshing area (7) separating an inlet (9) from an outlet (10) for the fluid volume flow, a relative angular change of a magnetic field component (31) being picked up as a measured signal via a measuring sensor (15) and the fluid volume flow being determined therefrom, a rotation of at least one of the toothed elements (3; 4) generating at least one sine and one cosine signal (38; 39), **characterized in that** the measuring sensor (15) detects an angular change of magnetic field lines and operates in accordance with an MR principle or AMR principle, a magnetic field generating device (19) assigned to the measuring sensor (15) being a diametric magnet with at least two poles, and
**in that** the magnetic field generating device (19) or a magnetic field changing device (34) is arranged in a hollow space (20), which is isolated hermetically from the fluid volume (11) in a shaft (5; 6) of a toothed element (3; 4).

5. Method according to Claim 4, **characterized in that** a sequence of trigger signals is generated from the measured signal (38; 39) via the sine and cosine signals.

6. Method according to at least one of Claims 4 and 5, **characterized in that**, for each full revolution of a toothed element, at least 32, preferably at least 64 and in particular at least 128 or more, rising or falling trigger flanks (40; 41), in particular square-wave pulses (42), are generated.

7. Method according to one of the preceding claims, **characterized in that** a direction of rotation of at least one toothed element (3, 4) is determined by using the measured signal (38, 39) from at least one measuring sensor (15).

8. Method according to one of the preceding claims, **characterized in that** a statement in relation to a complete revolution of at least one of the two toothed elements (3, 4) and/or to a position of at least one of the two toothed elements is determined by means of a correlation with regard to measured signals relating to respectively intermeshing toothed elements (3, 4).

9. Method according to one of the preceding claims, **characterized in that** conclusions are drawn about a position and/or a number of revolutions of at least one of the toothed elements from a cosine and a sine signal via an arctan relationship obtained therefrom.

## Revendications

1. Dispositif de mesure du débit volumique (1) destiné à mesurer un débit volumique de fluide (11) au moyen d'au moins deux éléments à denture (3 ; 4) montés rotatifs dans une chambre de mesure (8) et s'engrenant mutuellement, la chambre de mesure du débit volumique de fluide (11) possédant une entrée (9) et une sortie (10), une séparation entre l'entrée (9) et la sortie (10) étant formée dans la chambre de mesure dans une zone d'engrènement (7) par les dents qui s'engrènent les unes dans les autres des éléments à denture (3 ; 4) qui s'engrènent mutuellement et un débit volumique de fluide (11) transporté de l'entrée (9) vers la sortie (10) pouvant être enregistré en fonction d'un mouvement de rotation d'au moins l'un des éléments à denture, au moins une sonde de mesure (15) qui fonctionne sans contact destinée à la détection du mouvement de l'élément à denture au moyen d'un champ magnétique (30) qui varie par rapport à la sonde de mesure étant présente, le dispositif de mesure du débit volumique (1), en fonction d'un signal de mesure enregistré par la sonde de mesure (15), générant à chaque fois au moins un signal cosinusoïdal et un signal sinusoïdal en vue d'une interprétation de signal supplémentaire, **caractérisé en ce que** la sonde de mesure (15) détecte une modification angulaire des lignes de champ magnétique et fonctionne selon un principe de RM ou un principe de RMA, un appareil générateur de champ magnétique (19) associé à la sonde de mesure (15) étant un aimant diamétral possédant au moins deux pôles, et **en ce que** l'appareil générateur de champ magnétique (19) ou un dispositif de modification de champ magnétique (34) est disposé dans un espace creux (20) d'un arbre (5 ; 6) d'un élément à denture (3 ; 4), lequel est séparé hermétiquement du volume de fluide (11).

2. Dispositif de mesure du débit volumique (1) selon au moins l'une des revendications précédentes, **caractérisé en ce qu'**une paroi de séparation (23) résistante à la pression est disposée entre la chambre de mesure (8) et la sonde de mesure (15), la paroi de séparation (23) étant amagnétique.

3. Dispositif de mesure du débit volumique selon au moins l'une des revendications précédentes, **caractérisé en ce qu'**une sonde de mesure (15) est associée à chaque élément à denture (3 ; 4).

4. Procédé de mesure d'un débit volumique de fluide (11) au moyen d'un dispositif de mesure du débit volumique (1), au moins deux éléments à denture (3 ; 4) montés rotatifs et s'engrenant mutuellement étant mis en rotation l'un contre l'autre par le débit volumique de fluide, les dents des éléments à denture (3 ; 4) s'engrenant mutuellement, qui s'engrènent les unes dans les autres dans une zone d'engrènement (7), séparant une entrée (9) d'une sortie (10) pour le débit volumique de fluide, une modification angulaire relative d'une composante de champ magnétique (31) étant enregistrée en tant que signal de mesure par le biais d'une sonde de mesure (15) et le débit volumique de fluide étant déterminé à partir de celle-ci, une rotation d'au moins l'un des éléments à denture (3 ; 4) générant au moins un signal sinusoïdal et un signal cosinusoïdal (38 ; 39), **caractérisé en ce que** la sonde de mesure (15) détecte une modification angulaire des lignes de champ magnétique et fonctionne selon un principe de RM ou un principe de RMA, un appareil générateur de champ magnétique (19) associé à la sonde de mesure (15) étant un aimant diamétral possédant au moins deux pôles, et **en ce que** l'appareil générateur de champ magnétique (19) ou un dispositif de modification de champ magnétique (34) est disposé dans un espace creux (20) d'un arbre (5 ; 6) d'un élément à denture (3 ; 4), lequel est séparé hermétiquement du volume de fluide (11).

5. Procédé selon la revendication 4, **caractérisé en ce qu'**une séquence de signaux de déclenchement est générée à partir du signal de mesure (38 ; 39) par le biais des signaux sinusoïdaux et cosinusoïdaux.

6. Procédé selon au moins l'une des revendications 4 et 5, **caractérisé en ce que** par tour complet d'un élément à denture, au moins 32, de préférence au moins 64 et notamment au moins 128 fronts de déclenchement montants ou descendants (40 ; 41), notamment des impulsions rectangulaires (42), ou plus sont générés.

7. Procédé selon au moins l'une des revendications précédentes, **caractérisé en ce qu'**un sens de rotation d'au moins un élément à denture (3 ; 4) est déterminé au moyen du signal de mesure (38, 39) d'au moins une sonde de mesure (15).

8. Procédé selon au moins l'une des revendications précédentes, **caractérisé en ce qu'**une affirmation en rapport avec un tour complet d'au moins l'un des deux éléments à denture (3 ; 4) et/ou une position d'au moins l'un des deux éléments à denture est déterminée par l'intermédiaire d'une corrélation concernant les signaux de mesure en rapport à chaque fois avec les deux éléments à denture (3 ; 4) s'engrenant mutuellement.

9. Procédé selon au moins l'une des revendications précédentes, **caractérisé en ce qu'**une position et/ou un nombre de tours d'au moins l'un des éléments à denture est déduit(e) à partir d'un signal cosinusoïdal et un signal sinusoïdal par le biais d'une relation arctan obtenue à partir de ceux-ci.
